# EUROPÄISCHE PATENTANMELDUNG

(11) **EP 1 806 252 A2**
(43) Veröffentlichungstag der Anmeldung: **11.07.2007**
(21) Anmeldenummer: 07000011.2
(22) Anmeldetag: 02.01.2007
(51) Int. Cl.: B60J 7/047

(54) **Dach für ein Kraftfahrzeug**

(30) Priorität: 05.01.2006 DE 102006000848
(71) Anmelder: Magna Car Top Systems GmbH, 74321 Bietigheim-Bissingen (DE)
(72) Erfinder: Salz, Wolfram, 74343 Sachsenheim (DE)

(57) **Zusammenfassung**

Dieses Dach für ein Kraftfahrzeug, insbesondere einen Personenkraftwagen, umfasst wenigstens zwei relativ zueinander verstellbaren Dachelementen, die in einer oder mehreren Dachöffnungen eines Aufbaus angeordnet sind und mittels Steuereinrichtungen aus einer Schließstellung in Offen- und/oder Lüftungsstellungen bewegbar sind.

Um dieses Dach zu optimieren weisen die Steuereinrichtungen einerseits in Fahrzeuglängsrichtung verlaufende Führungsschienen für ein erstes vorderes von der Schließstellung in eine Offenstellung verschiebbares Dachelement und andererseits eine in Fahrzeugquerrichtung ausgerichtete Schwenkachse für ein zweites hinteres Dachelement auf, wobei das hintere Dachelement absenkbar ist und das vordere Dachelement im abgesenkten Zustand des hinteren Dachelements über das hintere Dachelement bewegbar ist.

## Beschreibung

Die Erfindung betrifft ein Dach für ein Kraftfahrzeug, insbesondere Personenkraftwagen nach dem Oberbegriff des Patentanspruchs1.

Es ist ein Fahrzeugdach in einem Aufbau eines Personenkraftwagens bekannt, DE 100 11 350 B4, das zwei beweglich in einer Öffnung des Aufbaus hintereinander angeordnete in einer Schließstellungen bündig zueinander ausgerichtete Deckel umfasst. Zumindest einer der Deckel ist aus seiner Schließstellung in Fahrzeuglängsrichtung in eine Offenstellung verschiebbar und beide Deckel sind wahlweise aus Schließstellungen in Lüfterstellungen verschwenkbar. Beide Deckel sind so gestaltet, dass der vordere Deckel um eine Hinterkante in eine Lüfterstellung absenkbar und der hintere Deckel um eine Vorderkante in eine Lüfterstellung anhebbar ist. Allerdings gibt diese Entgegenhaltung keine Hinweise über Art und Ausbildung der Einrichtungen, mit denen die verschiedenen Stellungen der Deckel verbracht werden.

Aus der DE 100 63 055 geht ein Dach für einen Personenkraftwagen hervor, welches Dach zwei verstellbare Dachelemente aufweist, die beide von Schließstellungen aus längsverschiebbar in Offenstellungen und winkelbeweglich in Lüfterstellungen bewegbar sind. In Offenstellungen der Dachelemente überragt das vordere das hintere und das hintere einen festen Aufbaubereich des Dachs.

Es ist Aufgabe der Erfindung ein Dach für einen Personenkraftwagen mit verstellbaren Dachelementen zu schaffen, die mit baulich einfachen, jedoch funktionsgerechten Mitteln aus Schließstellungen in Offenstellungen und Lüftungsstellungen und vice versa bewegbar sind.

Erfindungsgemäß wird diese Aufgabe durch die Merkmale des Patentanspruchs 1 gelöst. Weitere die Erfindung ausgestaltende Merkmale sind in den Unteransprüchen enthalten.

Die mit der Erfindung hauptsächlich erzielten Vorteile sind darin zu sehen, dass dank der Steuereinrichtungen, mit denen das vordere Dachelement und das hintere Dachelement unter Vermittlung einfach zu realisierenden Vorkehrungen in die konzipierten Schließstellungen, Offenstellungen und Lüftungsstellungen bewegbar sind, eine vorbildliche Dachkonstruktion darstellbar ist. Dabei ist sichergestellt, dass die Dachelemente in den Öffnungsstellungen und in den Lüftungsstellungen sowohl zum Fahrgastraum wie auch zur Fahrzeugaußenseite hin mit einem vertretbar geringen Raumanspruch auskommen. Für die Verschiebung des vorderen Dachelements dienen aufwandsarme gerade Führungsschienen, deren Anordnung als ein in Fahrtrichtung des Personenkraftwagens verlaufendes Gefälle ein baulich günstiges Verlagern des vorderen Dachelements oberhalb des hinteren Dachelements ermöglichen. Darüber hinaus tragen die gewählte Länge der Führungsschienen und die mit ihnen zusammenwirkenden Schiebestützen problemlos zu einer übersichtlichen Bauweise des Dachs bei.

In der Zeichnung wird ein Ausführungsbeispiel der Erfindung gezeigt, das nachstehend näher erläutert wird.

Es zeigen
Fig. 1 einen schematischen Längsschnitt eines Dachs für einen Personenkraftwagen mit zwei hintereinander liegenden verstellbaren in einer ersten Stellungskombination dargestellten Dachelementen,
Fig. 2 einen Schnitt entsprechend Fig. 1, jedoch mit einer zweiten Stellungskombination der Dachelemente,
Fig. 3 einen weiteren Schnitt entsprechend Fig. 1, jedoch mit einer dritten Stellungskombination der Dachelemente.

Von einem Personenkraftwagen 1 ist lediglich ein Aufbau 2 mit einem Dach 3 dargestellt, der einen oberen quer zur Fahrzeuglängsrichtung A-A verlaufenden Windschutzscheibenrahmen 4 für eine Windschutzscheibe 5 und einen hinteren wie der Windschutzscheibenrahmen 4 ausgerichtete Dachrahmen 6 aufweist. Der Windschutzscheibenrahmen 4 und der hintere Dachrahmen sind fest mit dem Aufbau 2 verbunden und begrenzen mit Abwinkelungen 7 und 8 eine Dachöffnung 9, in die ein erstes vorderes Dachelement 10 und ein hinteres Dachelement 11 eingesetzt ist; beide Dachelemente 10 und 11 sind durch eine Fuge 12 voneinander getrennt. Die bspw. aus durchscheinendem Glas bestehenden Dachelemente 10 und 11 verlaufen oberhalb eines Fahrgastraums 13 des Aufbaus 2 besitzen von besagtem Fahrgastraum 13 aus betrachtet einen konvexen Verlauf oder eine Bombierung, die durch die Formgebung der Außenhaut des Aufbaus 2 bestimmt sind. Darüber hinaus sind die Dachelement 10 und 11 bündig zueinander ausgerichtet und verstellbar ausgeführt. Hierfür sind Steuereinrichtungen 14 und 15 vorgesehen, über die die Dachelemente 10 und 11 aus einer Schließstellung Schst in Offenstellungen Ost I sowie Ost II und eine Lüftungsstellung Lüfst gelangen.

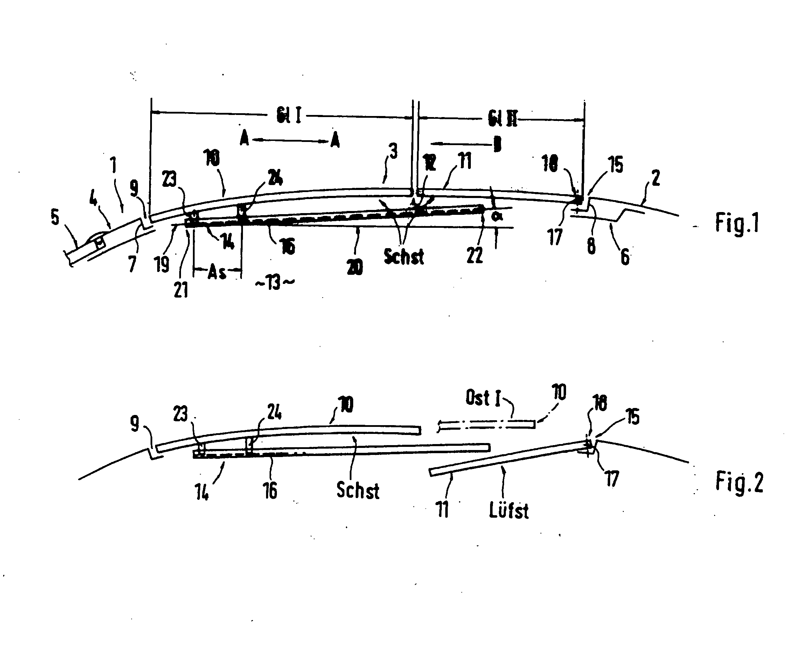

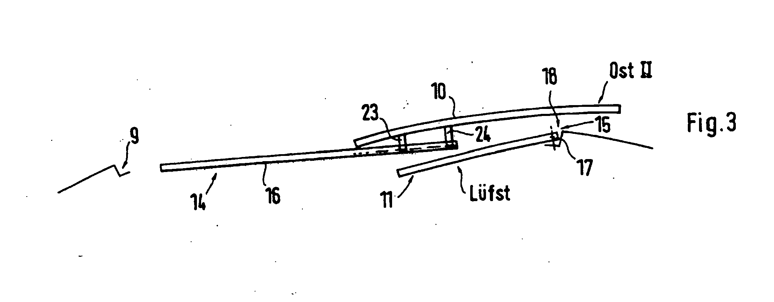

Die Steuereinrichtungen 14 und 15 für die Dachelemente 10 und 11 werden einerseits durch in Fahrzeuglängsrichtung A-A verlaufende Führungsschienen 16 für das vordere Dachelement 10 und andererseits durch eine Schwenkachse 17 für das hintere Dachelement 11 gebildet, die quer zur Fahrzeuglängsrichtung A-A verläuft und an einem hinteren Endbereich 18 des hinteren Dachelements 11 vorgesehen ist. Das hintere Dachelement 11 erreicht die Lüftungsstellung Lüfst -Fig. 2 und 3- indem es um die Schwenkachse 17 in Richtung Fahrgastraum 13 abgesenkt wird. In der Lüftungsstellung Lüfst des hinteren Dachelements 11 ist das vordere Dachelement 10 in eine der Offenstellungen Ost I oder Ost II bewegbar, welches vordere Dachelement 10 in den Offenstellungen Ost I und Ost I zumindest abschnittsweise eine Lage oberhalb des hinteren Dachelements 11 einnimmt.

Die benachbart von seitlichen Dachrahmen des Aufbaus 2 angebrachten Führungsschienen 16 des vorderen Dachelements 10 sind von der Seite auf den Personenkraftwagen 1 gesehen auf einer Geraden 19 angeordnet, die im Winkelά zu einer Horizontalen 20 verläuft, dergestalt, dass die Gerade 19 ein in Fahrtrichtung B sich erstreckendes Gefälle bildet; anders ausgedrückt die Führungsschienen 16 liegen vorne bei 21 näher an der Fahrbahn -nicht dargestellt- als hinten bei 22. Außerdem schließen die Gerade und die Horizontale den Winkel ά der ein spitzer ist und je nach Ausprägung der Bombierung des Dachs 3 zwischen 1° und 5° beträgt.

Die Führungsschienen 16 erstrecken sich über einen wesentlichen Abschnitt der Gesamtlänge GI I des vorderen Dachelements 10 und einen Teilabschnitt der Gesamtlänge GI II des hinteren Dachelements 11. Schließlich wirkt das vordere Dachelement 10 unter Zwischenschaltung von Schiebestützen 23 und 24 mit der jeweiligen Führungsschiene 16 zusammen, die in Fahrzeuglängsrichtung A-A mit Abstand As zueinander angeordnet sind. Besagte Schiebstützen 23 und 24 sind in der Offenstellungen OstI oder Ost II oberhalb des zweiten Dachelements 11 angeordnet.

## Patentansprüche

1. Dach für ein Kraftfahrzeug, insbesondere Personenkraftwagen, mit wenigstens zwei relativ zueinander verstellbaren Dachelementen, die in einer oder mehreren Dachöffnungen eines Aufbaus angeordnet sind und mittels Steuereinrichtungen aus einer Schließstellung in Offen- und/oder Lüftungsstellungen bewegbar sind, **dadurch gekennzeichnet, dass** die Steuereinrichtungen (14 und 15) einerseits in Fahrzeuglängsrichtung (A-A) verlaufende Führungsschienen (16) für ein erstes vorderes von der Schließstellung (Schst) in eine Offenstellung (Ost) verschiebbares Dachelement (10) und andererseits eine quer zur Fahrzeuglängsrichtung (A-A) ausgerichtete Schwenkachse (17) für ein hinteres Dachelement (11) umfassen, wobei das hintere Dachelement (11) absenkbar ist und das vordere Dachelement (10) in der abgesenkten Lüftungsstellung (Lüfst) des hinteren Dachelements (11) über das hintere Dachelement (11) bewegbar ist.

2. Dach nach Anspruch 1, **dadurch gekennzeichnet, dass** das hintere Dachelement (11) absenkbar ist und das vordere Dachelement (10) in der abgesenkten Lüftungsstellung (Lüfst) des hinteren Dachelements (11) über das hintere Dachelement bewegbar ist.

3. Dach nach den Ansprüchen 1 und 2, **dadurch gekennzeichnet, dass** die Führungsschienen (16) für das vordere Dachelement (10) von der Seite auf den Personenkraftwagen (1) gesehen auf einer Geraden (19) angeordnet sind, die im Winkel (ά) zu einer Horizontalen (20) verläuft.

4. Dach nach Anspruch 3, **dadurch gekennzeichnet, dass** die Gerade (19) ein in Fahrtrichtung (B ) verlaufendes Gefälle bildet.

5. Dach nach den Ansprüchen 1 bis 3,**dadurch gekennzeichnet**, das die Horizontale (20) und die Gerade (19) einen spitzen Winkel (ά) einschließen.

6. Dach nach Anspruch 5, **dadurch gekennzeichnet, dass** der spitze Winkel (ά) zwischen 1 ° und 5° beträgt.

7. Dach nach Anspruch 1, **dadurch gekennzeichnet, dass** wenigstens eines der Dachelemente (10 und 11) aus durchscheinendem Werkstoff wie bspw. Glas besteht.

8. Dach nach einem oder mehreren der vorangehenden Ansprüche **dadurch gekennzeichnet, dass** die Führungsschienen (16) sich über einen wesentlichen Abschnitt der Gesamtlänge (GI I) des vorderen Dachelements (10) und zumindest einen Teilabschnitt der Gesamtlänge (GII) des hinteren Dachelements (11) erstrecken.

9. Dach nach einem oder mehreren der vorangehenden Ansprüche, **dadurch gekennzeichnet, dass** das vordere Dachelement (11) über in Fahrzeuglängsrichtung (A-A) mit Abstand (As) zueinander angeordnete Schiebestützen (23 und 24) mit den Führungsschienen (16) zusammenarbeitet.

10. Dach nach den Ansprüchen 1 und 9, **dadurch gekennzeichnet, dass** die Schiebestutzen (23 und 24) in der vollständigen Offenstellung (Ost II) des vorderen Dachelements (10) oberhalb des hinteren Dachelements (11) verlaufen.
